# EUROPÄISCHE PATENTSCHRIFT

(11) **EP 1 086 877 B1**
(45) Veröffentlichungstag und Bekanntmachung des Hinweises auf die Patenterteilung: **23.02.2005**
(21) Anmeldenummer: 00810896.1
(22) Anmeldetag: 27.09.2000
(51) Int. Cl.: B62B 13/04, B62B 17/08, B62B 13/18, B62B 17/02

(54) **Personen tragend verwendbare Vorrichtung zur Fortbewegung auf einer Bodenoberfläche**
Vehicle adapted for transporting people
Véhicule pour le transport de personnes

(30) Priorität: 27.09.1999 CH 175899
(43) Veröffentlichungstag der Anmeldung: 28.03.2001
(73) Patentinhaber: Probst, Kuno, 4512 Bellach (CH)
(72) Erfinder: Probst, Kuno, 4512 Bellach (CH)
(74) Vertreter: Roshardt, Werner Alfred, Dipl.-Phys.

(56) Entgegenhaltungen:
- DE-A- 2 210 784
- DE-C- 866 614
- US-A- 1 394 629
- US-A- 2 024 423
- US-A- 2 513 199
- US-A- 3 779 572
- US-A- 3 799 565
- US-A- 4 152 007
- US-A- 4 869 336
- US-A- 5 509 683

## Beschreibung

### Technisches Gebiet

Die Erfindung betrifft eine Vorrichtung gemäß dem Oberbegriff des Patentanspruchs 1; wie es beispielsweise aus US-A-3 799 565 bekannt ist.

Unter einer tragenden Gleitfläche wird eine Fläche verstanden, welche z. B. im lockeren Schnee, auf Sand, ... die Vorrichtung mit wenigstens einer ihr zugeordneten Person (Fahrer) trägt, also nur ein geringes Einsinken zuläßt. Eine Führungsklinge dient zur Führung der Vorrichtung. Sie dient aber auch als Fahrkante auf einem festen, d. h. auf vereisten Boden.

### Stand der Technik

Aus der DE-A 36 06 656 sind Kufen für einen Schnee- und Eisgleiter bekannt. Sie werden z. B. bei einem Bobschlitten verwendet. Die Fahrrichtungssteuerung des bekannten Schlittens erfolgte durch ein entsprechendes Verbiegen der Kufen, wobei die Verbiegung möglichst dem zu fahrenden Kurvenradius angepasst war. Die Kufen waren hier einstückig mit unterschiedlich geformten Gleitflächen ausgebildet.

Aus der CH-A 685 616 ist ein Rodelschlitten mit ebenfalls zum Kurvenfahren verbiegbaren Kufen bekannt. Auch hier sind die Kufen einstückig ausgebildet. Die Kufenlauffläche ist abgerundet ausgebildet.

Aus der US-A 2 006 328 ist ein weiterer Schlitten mit Kufen vorhanden. Auch hier erfolgt eine Lenkung durch Verbiegen der Kufen. Die Kufen hatten nur jeweils eine Fahrkante. Eine tragende Gleitfläche neben den klingenartigen Kufen war nicht vorhanden. Dieser Schlitten konnte nur auf einer harten, d.h. vereisten Bodenoberfläche verwendet werden.

Aus der US-A 3 519 284 ist ein weiterer steuerbarer Schlitten bekannt. Der bekannte Schlitten hatte Kufen mit einer lediglich horizontal verlaufenden Gleitfläche.

Aus der US 3 799 565, der US 2 513 199 und der US 1 394 629 ist eine Personen tragend verwendbare Vorrichtung zur Fortbewegung auf einer Bodenfläche bekannt. Die bekannte Vorrichtung hat wenigstens ein Fahrbrett und ein mit diesem verbundenes, zur Fahrtrichtungssteuerung dienendes Steuerbrett. Fahr- und/oder Steuerbrett weisen wenigstens eine seitlich zur tragenden Gleitfläche angeordnete Führungsklinge auf. Eine Bremseinrichtung mit einem Bodeneingriff ist hier jedoch nicht vorhanden.

Aus der DE 2 210 744, der US 4152 007 und der US 5 509 683 sind Bremseinrichtungen bekannt. Am Fahr- und/oder Steuerbrett angeordnete, für einen Fahrbodeneingriff ausgebildete Führungsklingen sind jedoch nicht vorhanden, auch lässt die hier beschriebene Bremseinrichtung in ihrer Wirkung zu wünschen übrig.

### Darstellung der Erfindung

### Aufgabe der Erfindung

Die Aufgabe der Erfindung ist es, eine Personen tragend verwendbare Vorrichtung zur Fortbewegung auf einer Bodenoberfläche zu schaffen, welche vielseitig vierwendbar, einfach zu steuern ist und gute Fahrtrichtungseigenschaften aufweist.

### Lösung der Aufgabe

Die Aufgabe der Erfindung wird durch die Merkmale des Patentanspruchs 1 gelöst.

Die erfindungsgemäße Vorrichtung hat wenigstens ein Fahrbrett und ein mit diesem verbundenes zur Fahrtrichtungssteuerung dienendes Steuerbrett. Das Fahr- und/oder das Steuerbrett haben wenigstens eine seitlich neben der tragenden Gleitfläche angeordnete Führungsklinge. Hierdurch kann die Vorrichtung einmal auf losem Boden, wie insbesondere Sand und Pulverschnee, leicht in gleitender Wirkung verfahren werden. Zum anderen kann sie auch auf den Klingenkanten fahrend auf hartem Boden, wie Eis verwendet werden. Da die Führungsklingen seitlich an den Gleitflächen lösbar angeordnet sind, können sie auch nach Gebrauch zu Servicezwecken auf einfache Art und Weise abgenommen und nachbearbeitet werden.

In einer bevorzugten Ausführungsvariante sind die Führungsklingen mit einer oberen und einer unteren Fahrkante ausgebildet. Ist nun eine der Kanten "abgefahren", kann die betreffende Führungsklinge einfach umgedreht werden. Erst wenn auch diese Kante abgefahren ist, wird man eine Nachbearbeitung vornehmen.

Man kann nun auch jede Führungsklinge aussermittig seitlich an den Brettern anordnen. Hierdurch kann ein unterschiedlich tiefes "Einstechen" in den Boden vorgegebenen werden. Ein kann nun jeweils nur eine sowie auch mehrere aussermittige Befestigungsmöglichkeiten vorgesehen werden.

An der Vorrichtung sind ferner Bremsen angeordnet. Jede Bremseinrichtung ist nun im Endbereich des Fahrbrettes angeordnet. Sie könnten auch im Endbereich jedes Steuerbrettes angeordnet werden. Vorteilhafter wird man jedoch eine Anordnung an den Fahrbretter vornehmen, wie aus den nachfolgenden Ausführungen ersichtlich ist. Die Bremseinrichtung hat ein nach unten über die Gleitfläche des Brettes herausfahrbares Bremselement, welches bevorzugt über die gesamte Brettbreite Bodeneingreifelemente aufweist. Die Bodeneingreifelemente müssen nicht über die gesamte Brettbreite angeordnet werden; sie können über weniger oder mehr als die Brettbreite angeordnet werden. Die Bodeneingreifelemente können nun mehr oder weniger gegen die Bodenoberfläche auf der sich die Vorrichtung bewegt, eingedrückt werden. Durch das Eindrücken wird nun mehr oder weniger Bodenmaterial "abgeraspelt" Dieses abgeraspelte Bodenmaterial erfährt durch die Fahrtgeschwindigkeit der Vorrichtung eine Beschleunigung. Bevorzugt wird nun die Vorrichtung derart ausgebildet, dass ein Freiraum vorhanden ist, durch den dieses Material nach oben austreten kann. Der Freiraum darf durch das abgeraspelte Material nicht verstopft werden, da ansonsten das Fahrbrett lediglich rückseitig angehoben wird und dieses auf dem Verstopfungspfropfen gleiten würde. Bei einer Fahrt in lockerem Material, wie Schnee oder Sand, wird dieses abgeraspelte Material je nach Fahrtgeschwindigkeit und Bremswirkung in einem mehr oder weniger hohen Bogen am Ende des Fahrbrettes ausgeworfen.

Die Führungsklingen können nun jeweils nur an einer Brettseite oder an beiden Seiten angeordnet werden. Wird nur an einer Seite angeordnet, ergibt sich ein Kippmoment auf die Bretter, wobei dann gegenüber einer beidseitigen Anordnung eine stabilere Brettaufhängung gewählt werden muss. Die Führungsklingen müssen nicht über die ganze Länge des Fahr- bzw. Steuerbretts angeordnet werden. Um ein gutes Fahrverhalten auf einen unebenen Boden zu erhalten, wird man wenigstens eines der Bretter (bei einer Ausbildung als Schlitten die beiden vorderen) um eine annähernd horizontal verlaufende Achse schwenkbar ausbilden.

Wird das Steuerbrett mit einer Lenkstange versehen, ergibt sich eine rollerartige Vorrichtung zum Gleiten auf Schnee oder Sand. Wird auf jede Führungsklinge je ein Rad aufgeschoben und rastend bzw. verklinkt gehalten, ist aus einem "gleitenden" Roller ein normaler "rollender" Roller geworden. An der Lenkstange können dann Bedienelemente für die Bremse angeordnet werden. Auch kann der Roller, wie unten ausgeführt, zusammenlegbar gestaltet werden.

Werden nicht nur ein Steuerbrett und ein Fahrbrett steuerbar miteinander verbunden, sondern eine linke und eine rechte Anordnung aus Steuer- und Fahrbrett, so ist aus dem Roller ein Schlitten bzw. Bob bzw. eine "Seifenkiste" (rollendes "Fahrzeug") geworden.

Einen Schlitten wird man in vorteilhafter Weise neben einer oben skizzierten Bremseinrichtung auch noch mit einer Zwangsbremseinrichtung versehen, da der Schlittenfahrer aus dem Schlitten stürzen könnte und dieser dann ungelenkt ins Tal donnern könnte. Beim Roller kann diese Zwangsbremsung ebenfalls vorgesehen werden.

In bevorzugter Weise ist am Schlitten ein unten beschriebene Skiliftbügeleinhängevorrichtung angebracht. Diese Einhängevorrichtung ist, wie unten erläutert, auf einfache Art und Weise freigebbar.

### Kurze Beschreibung der Zeichnungen

Im Folgenden werden Beispiele der erfindungsgemäßen Vorrichtung anhand der nachfolgenden Zeichnungen näher erläutert. Weitere Vorteile der Erfindung ergeben sich aus dem Beschreibungstext. Es zeigen:
- Fig. 1: eine Seitenansicht auf ein Steuerbrett der erfindungsgemäßen Vorrichtung,
- Fig. 2: eine Seitenansicht auf ein Fahrbrett der erfindungsgemäßen Vorrichtung,
- Fig. 3: eine Draufsicht auf die Gleitfläche des in **Figur 2** dargestellten Fahrbrettes,
- Fig. 4: eine Seitenansicht der erfindungsgemäßen Vorrichtung ausgebildet als "gleitender" Roller,
- Fig. 5: eine Draufsicht auf den in **Figur 4** dargestellten Roller,
- Fig. 6: eine Seitenansicht des in **Figur 4** dargestellten Roller in einem zusammengeklappten Zustand,
- Fig. 7: eine skizzierte Ansicht zur Darstellung eines auf die Führungsklinge aufgeschobenen Laufrades,
- Fig. 8: eine Seitenansicht einer als Schlitten ausgebildeten erfindungsgemäßen Vorrichtung,
- Fig. 9: eine Draufsicht auf den in **Figur 8** dargestellten Schlitten,
- Fig. 10: ein Ausführungsbeispiel einer Bremseinrichtung der in den **Figuren 1** bis **9** dargestellten Vorrichtung im nicht eingebremsten Zustand,
- Fig. 11: die in **Figur 10** dargestellte Bremseinrichtung im eingebremsten Zustand,
- Fig. 12: eine schematische Darstellung einer Notstoppeinrichtung für den in den Figuren **8** und **9** dargestellten Schlitten,
- Fig. 13: die in **Figur 12** dargestellte Notstoppeinrichtung in ausgelöstem Zustand,
- Fig. 14: ein mit der Notstoppeinrichtung zusammenwirkendes Auslöseelement und
- Fig. 15: einen Querschnitt durch ein Schwenklager für ein Steuerbrett des in den **Figuren 8** und **9** dargestellten Schlittens.

### Wege zur Ausführung der Erfindung

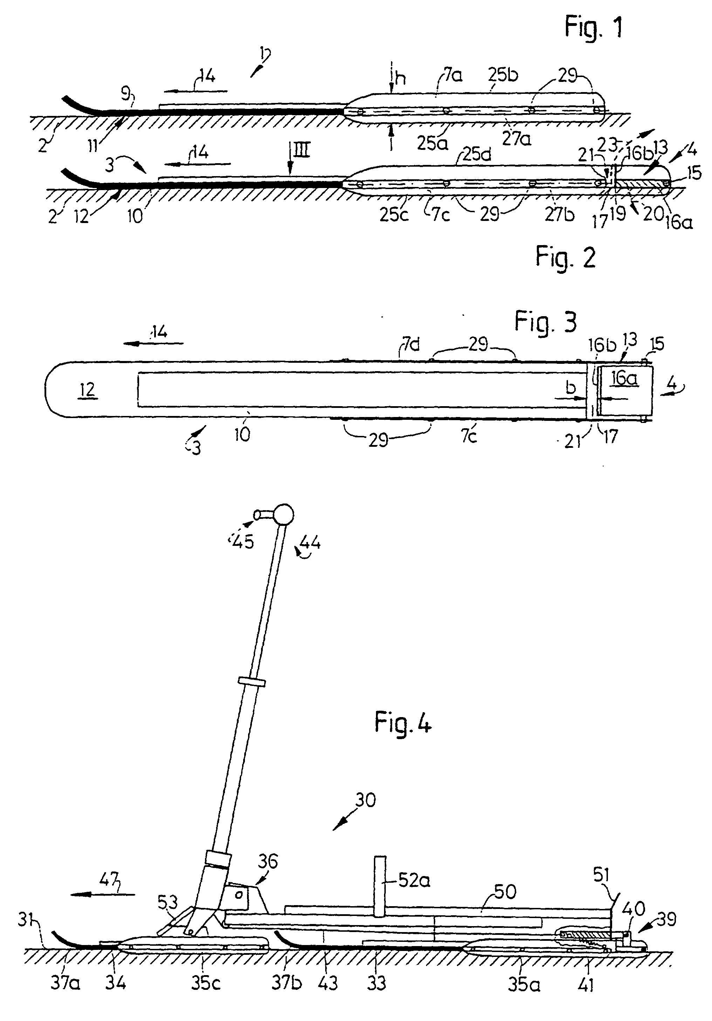

In der **Figur 1** ist ein Steuerbrett **1** und in den **Figuren 2** und **3** ein Fahrbrett **3** der erfindungsgemäßen Vorrichtung dargestellt. Eine Verbindung von Steuer- und Fahrbrett **1** und **3** zu einem gleitenden bzw. rollenden Roller bzw. zu einem rollenden Fahrzeug bzw. gleitenden Schlitten als erfindungsgemäße Vorrichtung ist unten ausgeführt.

Prinzipiell sind Steuer- und Fahrbrett **1** und **3** gleich ausgebildet. Lediglich an einem der Bretter **1** oder **3** ist eine gegen den Boden **2** ausfahrbare Bremseinrichtung **4** angeordnet. Die Bremseinrichtung **4** ist hier am Fahrbrett **3** angeordnet. Jedes Brett **1** bzw. **3** hat hier zwei Führungsklingen **7a** bis **7d** (die Führungsklinge **7b** ist in den Figuren nicht sichtbar). Die Führungsklingen **7a** und **7b** sind am Steuerbrett **1** und die Führungsklingen **7c** und **7d** sind am Fahrbrett **3** angeordnet. Beide Bretter **1** und **3** haben einen Gleitkörper **9** bzw. **10,** der hier beispielsweise aus einem carbonverstärkten Material besteht. Die untere Gleitfläche **11** bzw. **12** jedes Gleitkörpers **9** bzw. **10** ist plan ausgebildet. In seinem in Fahrtrichtung **14** vorderen Teil ist das Steuer- bzw. Fahrbrett **1** bzw. **3** nach oben gezogen.

Die Bremseinrichtung **4** verläuft annähernd über die gesamte Breite der Gleitfläche **12.** Sie hat ein Bodeneingreifelement **13**. Das Eingreifelement **13** ist hier beispielsweise als zweiteilige Platte ausgebildet. An einer der Plattenseiten der einen Platte **16a** ist das Eingreifelement **13** in einer Schwenkachse **15** verschwenkbar gehalten und an der dieser Seite gegenüberliegenden Seite ist eine Leiste **17** mit krallenartigen Elementen **19** ausgebildet, welche zum Bremsen in Pfeilrichtung **20** in den Boden **2** eingedrückt werden. Die zweite mit der ersten Platte **16a** fest verbundene Platte **16b** dient als Element zum Aufwirbeln abgeraspelter Bodenteile.

In Fahrtrichtung **14** ist der Bremseinrichtung **4** ein Freiraum **21** vorgeordnet. Der Freiraumquerschnitt, insbesondere dessen Breite **b** in Fahrtrichtung **14** ist derart groß gewählt, dass beim Bremsen abgeraspeltes Bodenmaterial einwandfrei in der Pfeilrichtung **23** austreten kann, ohne ein Verstopfen des Freiraums **21** zu verursachen. Die Bremswirkung hängt vom Ausfahrweg der "Platte" **13** ab.

Die Führungsklingen **7a** bis **7d** sind identisch ausgebildet. Sie bestehen lediglich aus jeweils einer Platte mit der in den **Figuren 1** und **2** gezeigten Kontur. Als Material wird man bevorzugt (nicht rostenden) Stahl verwenden. Die Ober- und Unterseite **25a** bzw. **25b** sind als Fahrkante entsprechend den gewünschten Fahreigenschaften geschliffen. Jede Führungsklinge **7a** bis **7d** ist hier mit in einer Linie **27a** bzw. **27b** angeordneten Schrauben **29** an den Seiten des Gleitkörpers **9** angeschraubt. Die Linie **27a** bzw. **27b** liegt aussermittig zur Höhe h der Führungsklingen. Je nachdem, in welcher Lage die Führungsklingen **7a** bis **7d** angeschraubt werden, ergibt sich ein größeres oder kleineres Überstehen über die betreffende Gleitfläche **11** bzw. **12**. Es ist hiermit eine Anpassung an die Eindringtiefe, hervorgerufen durch die Dichtigkeit des Bodenmaterials, auf dem geglitten werden soll, möglich.

In den **Figuren 4** bis **6** ist eine bevorzugt Personen tragend verwendbare Vorrichtung **30** zur Fortbewegung auf einer Bodenoberfläche **31** dargestellt. Die erfindungsgemäße Vorrichtung ist hier beispielsweise als ein "gleitender" Roller **30** ausgebildet. Der Roller **30** hat ein analog zum Fahrbrett **3** ausgebildetes Fahrbrett **33** und ein analog zum Steuerbrett **1** ausgebildetes Steuerbrett **34.** Steuer- und Fahrbrett **33** und **34** haben auch hier analog zu den Führungsklingen **7a** bis **7d** ausgebildete Führungsklingen **35a** bis **35d.** Auch hier sind die Führungsklingen **35a** bis **35d** seitlich zu den tragenden Gleitflächen **37a** und **37b** des Steuer- und Fahrbretts **33** und **34** lösbar angeordnet. Fahrund Steuerbrett **33** und **34** sind zum Lenken verschwenkbar über ein Schwenkgelenk **36,** an dem eine Lenkgabel **44** angreift, miteinander verbunden.

Ferner ist auch hier eine analog zur Bremseinrichtung **4** ausgebildete Bremseinrichtung **39** vorhanden. Die Bremseinrichtung **39** ist auch hier verschwenkbar an einer Schwenkachse **40** und mit einer Zugfeder **41** in Ruhelage gehalten. Die Betätigung erfolgt über einen Seilzug **43,** der mittels eines an einer Lenkergabel **44** angeordneten Hebels **45** bedienbar ist. Auch hier wird das beim Bremsen von Boden **31** weggeraspelte Material durch einen in Fahrtrichtung **47** der Bremseinrichtung **39** vorgeordneten Freiraum **49** nach oben ausgeworfen. Zur Führung des auszuwerfenden Materials ist an einem dem Fahrbrett **33** zugeordneten Trittbrett **50** ein Führungsblech **51** angebracht.

Das Trittbrett **50** ist mit hier nicht explizit dargestellten Tragelementen mit dem Fahrbrett **33** fest verbunden. Auf dem Trittbrett **50** sind zwei Fußlaschen **52a** und **52b** angeordnet, in welche die Füße einer den gleitenden Roller **30** benützenden Person einsteckbar sind. Die beiden Füße wird man insbesondere bei einer auf Schnee gleitenden Abfahrt einstecken, um ein einem Surfbrett analoges Fahrverhalten zu erreichen.

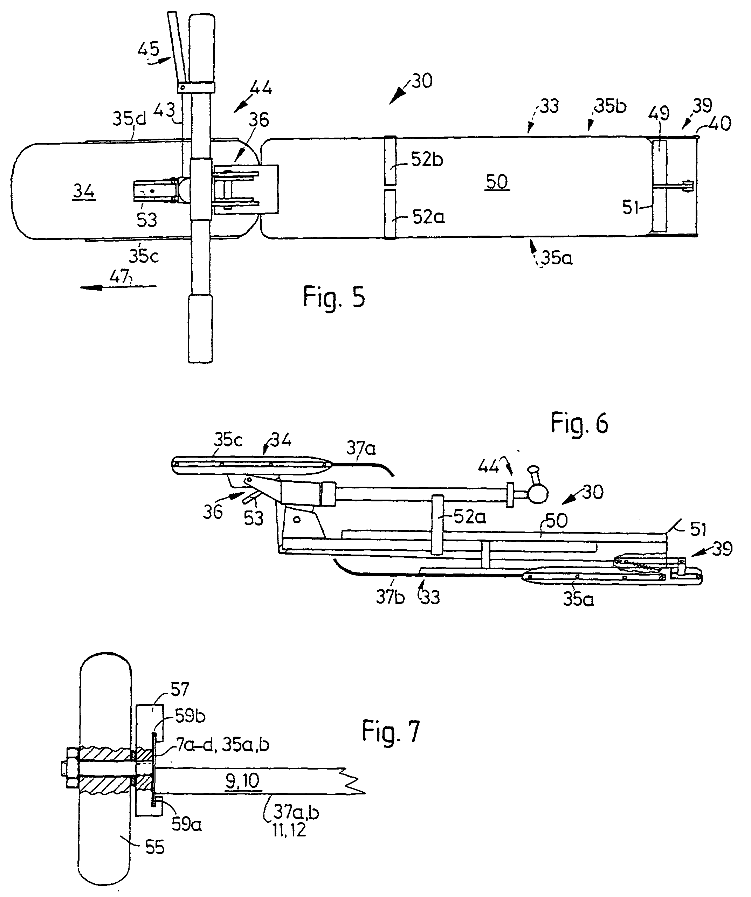

Die Lenkgabel **44** wird durch eine Fixierungsplatte **53** in der in **Figur 4** gezeigten Lage gehalten. Die Fixierungsplatte **53** ist selbstfixierend, insbesondere durch eine hier nicht dargestellte Feder in der in **Figur 4** gezeigten Stellung gehalten. Wird nun die Fixierungsplatte **53** entgegen ihrer Fixierungshaltekraft weggeklappt, so wird das Steuerbrett mittels einer ebenfalls nicht dargestellten Feder gegen die Lenkgabel **44** aufgeschwenkt. Durch eine Entriegelung des Schwenkgelenks **36** kann die Lenkgabel **44** in die in **Figur 6** gezeigte Lage geklappt werden. Der zusammengeklappte Roller ist nun einfach zu transportieren.

Bei der oben beschriebenen erfindungsgemäßen Vorrichtung handelt es sich um einen "gleitenden" Roller **30**. Dieser Roller kann aber mit nur ein paar wenigen Handgriffen in einen "rollenden" Roller verwandelt werden. Hierzu werden, wie in **Figur 7** dargestellt ist, auf die Führungsklingen **7a** bis **7d** bzw. **35a** bis **35d** Räder **55,** welche an einer Halteplatte **57** gelagert sind, aufgeschoben. Jede Halteplatte **57** hat einen oberen und unteren Schlitz **59a** und **59b,** in welchen die Führungsklingen **7a** bis **7d** bzw. **35a** bis **35d** eingreifen. Die Halteplatte wird nun vom vorderen oder vom hinteren Ende der Führungsklingen **7a** bis **7d** bzw. **35a** bis **35d** ausgehend aufgeschoben. Jede Halteplatte **57** hat nun einen mit einer lösbaren Druckfederung versehenen Rastmechanismus (nicht dargestellt), der über einem der Köpfe der Schrauben **29** einrastet. Andere lösbare Rastmechanismen können selbstverständlich verwendet werden.

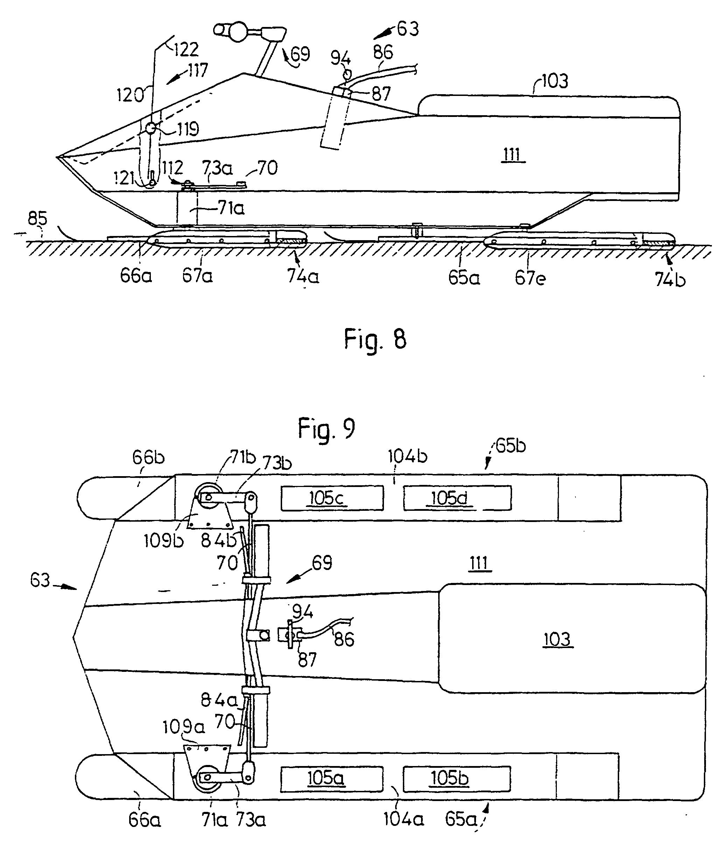

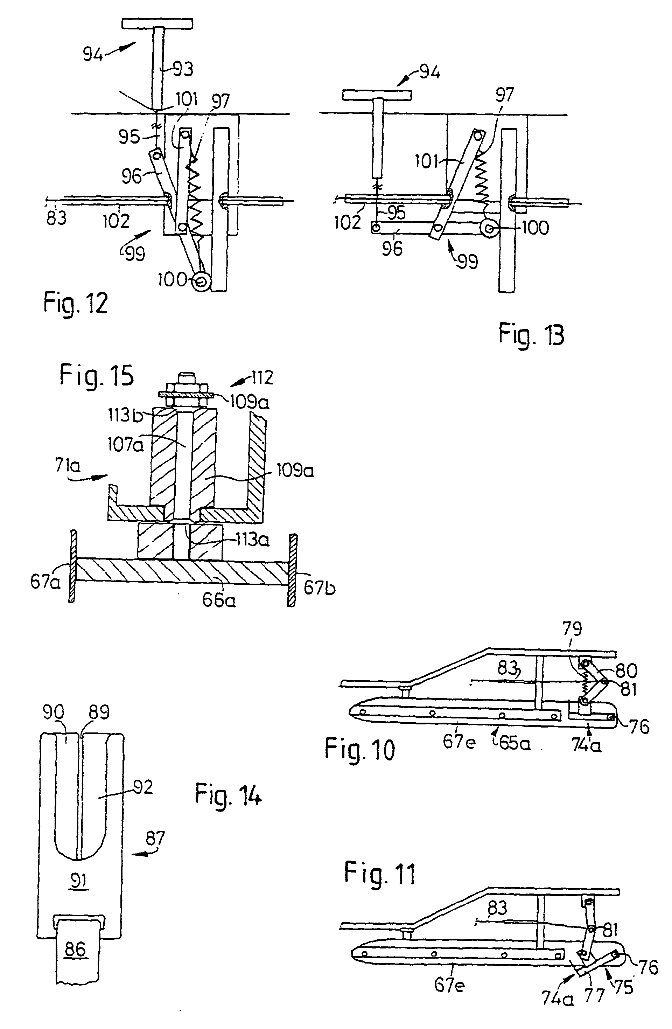

Anstatt die erfindungsgemäße Vorrichtung als gleitenden oder rollenden Roller **30** auszubilden, kann sie auch als Schlitten **63** ausgebildet werden, der sich zudem noch in ein "seifenkistenähnliches" Fahrzeug umfunktionieren lässt. Der in den Figuren **8** und **9** dargestellte lenkbare Schlitten **63** hat ein linkes und ein rechtes nebeneinander angeordnetes Paar, bestehend aus einem Fahr- und einem Steuerbrett **65a, 65b, 66a** und **66b,** welche analog zu den Fahr- und Steuerbrettem **1, 3, 33** und **34** ausgebildet sind. Auch hier sind Führungsklingen **67a** bis **67h** vorhanden. Eine Steuerung erfolgt über eine Lenkgabel **69**, welche über ein nicht dargestelltes Lenkgetriebe auf eine Lenkstange **70** wirkt, welche über einen in einem Lager **71a** bzw. **71b** gelagerten Lenkhebel **73a** bzw. **73b** die vorderen Steuerbretter **66a** bzw. **66b** zur Fahrtrichtungsänderung verschwenkt.

Am hinteren Ende jedes Fahrbrettes **65a** bzw. **65b** ist eine Bremseinrichtung **74a** bzw. **74b** angeordnet. Die Bremseinrichtungen **74a** und **74b** können nun derart ausgebildet sein, wie bereits oben beschrieben oder wie in den **Figuren 10** (ungebremster Zustand) und **11** (eingebremster Zustand) dargestellt. Auch hier ist eine gegen den Boden schwenkbare zweiplattige Anordnung **75** vorhanden, welche mit einem Schwenkgelenk **76** verschwenkbar gehalten ist. Ferner ist der mit dem Schwenkgelenk **76** verbundene Plattenteil **77** der Anordnung **75** über einen mit einer Zugfeder **79** belasteten Kniegelenkhebel **80** verbunden. Am Kniegelenk **81** greift nun ein Seilzug **83** an, der zu einem der beiden Griffhebel **84a** und **84b** an der Lenkgabel **69** geführt ist. Durch Anziehen des Seilzuges **83** wird der Kniegelenkhebel **80** gestreckt, wodurch die Bremseinrichtung **74a** bzw. **74b** zum Eingriff mit dem Boden **85** gebracht wird.

Sollte der Schlittenfahrer aus irgend einem Grund von Schlitten **63** herunterfallen, wird selbsttätig ein Notstop ausgelöst, damit der Schlitten nicht ins Tal donnern kann. Die Auslösung eines Notstops wird anhand der **Figuren 12** und **13** erklärt. Am Schlittenfahrer ist ein Band **86** befestigt, welches mit einem in **Figur 14** dargestellten Sicherungsteil **87** verbunden ist. Der Sicherungsteil **87** hat eine mit einem Schlitz **89** versehene Bodenplatte **90,** auf der ein Griffelement **91** mit einer Ausnehmung **92** für einen in den **Figuren 12** und **13** dargestellten Schaft **93** eines Handgriffes **94** angeordnet ist. Am Schaftende ist ein Seilzug **95** eingesetzt. Der Seilzug **95** ist mit dem Ende eines Hebels einer mit einer Zugfeder **97** belasteten Doppelhebelanordnung **99** verbunden. Der Hebel **96** ist mit einem Schwenklager **100** an seinem anderen Hebelende verschwenkbar gehalten. Etwa in der Mitte des Hebels **96** greift der zweite Hebel **101** der Doppelhebelanordnung **99** an. Der Seilzug **83** durchdringt mittels einer Durchgangsbohrung den Hebel **101**. Unmittelbar vor der Durchgangsbohrung ist eine Ummantelung**102** mit dem Seilzug **83** fest verbunden. Wird die Bremseinrichtung **74a** bzw. **74b** mit dem betreffenden Griffhebel **84a** bzw. **84b** betätigt, so entfernt sich die auf den Seilzug **83** angeordnete Ummantelung **102** vom Hebel **101**. Wird jedoch der Sicherungsteil **87** aus dem Seilzug **95** herausgerissen, so wird der durch die Kraft der Zugfeder **97** beaufschlagte Handgriff **94** eingezogen und der Hebel **101** aus seiner in **Figur 12** gezeigten Ruhelage bewegt, wodurch die Ummantelung nach links verschoben wird, was der oben aufgezeigten Bremswirkung gleich kommt.

Der Handgriff **94** wird nur durch den Seilzug **95** im Sicherungsteil **87** gehalten. Er ist somit aus der Vertikalen aus Sicherheitsgründen leicht wegschwenkbar

Neben den oben bereits angeführten funktionellen Elementen hat der Schlitten **63** eine erhöht angeordnete Sitzfläche **103** sowie beidseits dazu unmittelbar über der Befestigung der Fahr- und Steuerbretter **65a** und **65b** sowie **66a** und **66b** eine Fußauflage **104a** und **104b**. Jede Fußauflage **104a** und **104b** weist Felder **105c** bis **105d** mit einem rauhen Belag auf, um eine gute und gegen Ausgleiten gesicherte Fußsohlenhalterung zu erreichen.

Die Lenkstange (Spurstange) **70** greift beidseits an einem Lenkhebel **73a** und **73b** an, der, wie insbesondere in **Figur 15** zu sehen ist, verdrehfest über je einen Bolzen **107a** bzw. **107b** mit jeweils einem Steuerbrett**66a** bzw. **66b** verbunden ist. Die Bolzen **107a** und **107b** durchdringen mit einer Spielpassung jeweils einen Haltezylinder **109a** bzw. **109b**, welche über jeweils einen Flansch **109a** bzw. **109b** am Schlittenchassis **111** gehalten sind. Die Haltezylinder **109a** und **109b** sind aus einem Kunststoff mit guten Gleiteigenschaften, wie beispielsweise Delrin gefertigt. Jeder Lenkhebel **73a** und **73b** ist mit dem jeweiligen Bolzen **107a** bzw. **107b** durch Kontermuttern **112** drehfest verbunden. Um ein Verdrehen jedes Bolzens **107a** bzw. **107b** im jeweiligen Haltezylinder **109a** bzw. **109b** zu ermöglichen, ist jeder Bolzen **107a** bzw. **107b** an der Ober- und Unterseite des Haltezylinders **109a** bzw. **109b** jeweils in einem Konus **113a** und **113b** verdrehbar gehalten. Der jeweils untere Konus **113b** sitzt auf einem mit dem Steuerbrett **66a** bzw. **66b** verbundenen Klotz **114**.

In **Figur 15** ist jeder Bolzen **107a** bzw. **107b** fest mit dem jeweiligen Steuerbrett **66a** bzw. **66b** verbunden. Es kann aber auch an der Verbindungsstelle zwischen Bolzen - Klotz - Steuerbrett ein Schwenkgelenk vorgesehen werden, welches eine Schwenkbewegung senkrecht zur Längsachse der Steuerbretter **66a** bzw. **66b** zuläßt. Hierdurch ergibt sich ein besseres Fahrverhalten des Schlittens **63** in unebenem Gelände. Zu dieser einen Verschwenkrichtung könnte noch eine parallel zur Längsachse des Steuerbretts vorgesehen werden. Hierdurch würde zwar das Fahrverhalten noch verbessert, jedoch dürfte der damit erzielte Vorteil den Aufwand nicht unbedingt rechtfertigen.

Der Schlitten **63** kann ferner eine Skiliftbügeleinhängevorrichtung **117** aufweisen, wie sie in **Figur 8** einmal ein- und einmal ausgeklappt schematisch dargestellt ist. Die Skiliftbügeleinhängevorrichtung **117** besteht im Wesentlichen aus einem um eine horizontal liegende Achse **119** verschwenkbar angeordneten zweiarmige Hebelstange **120**. Das eine Ende der Hebelstange **120** ist derart mit einem Riegel **121** verriegelbar, dass die Hebelstange **120** annähernd vertikal steht. Der andere Hebelarm hat einen nach hinten abgewinkelten Endbereich **122**. In diesen Endbereich **122** kann der Skiliftbügel eingehängt werden.

Bevorzugt hat die Skilifteinhängevorrichtung zwei starr miteinander verbundene zweiarmige Hebelstangen, welche in einem gegenseitigen Abstand voneinander derart angeordnet sind, dass der Skiliftbügel mit seinem mit dem Schleppseil verbundenen Mittelelement zwischen den beiden Hebelstangen zu liegen kommt. Der linke und der rechte Sitzbügel greifen dann in je einen abgewinkelten Endbereich der Hebelstangen ein.

Wird die Hebelstange bzw. Hebelstangen entriegelt, so klappt der abgewinkelte Hebelendteil nach vorne und der Skiliftbügel rutscht heraus. Die Entriegelung erfolgt durch ein an der Lenkgabel **69** angeordnetes, hier nicht dargestelltes Bedienelement.

Sollte der Schlittenfahrer aus irgendwelchen Gründen aus dem Schlitten fallen und würde der an den Skiliftbügel angekoppelte Schlitten an ein Hindernis fahren, so würde der Skiliftbügel das abgewinkelte Hebelende weiterziehen, worauf der Schlitten hinten aufgehoben würde, bis der Skiliftbügel aus dem nun nach vom sich schwenkenden abgewinkelten Ende heraus gleiten würde. Da der Schlittenfahrer den Schlitten verlassen hat, ist auch der oben beschriebene Notstop ausgelöst worden; der Schlitten bleibt an seinem Ort stehen.

Der Riegel **121** kann auch zusammen mit der Notstopauslösung entriegelt werden.

Die oben beschriebenen Führungsklingen **7a - 7d; 35a - 35d** und **67a - 67h** haben eine Lochreihe **27a** und **27b** durch die Schrauben **29** gesteckt werden, um die Klingen an den Seiten der Gleitkörper der Steuer- und Fahrbretter zu befestigen. Anstatt der einen gezeigten Lochreihe, können selbstverständlich mehrere übereinander liegende Lochreihen vorhanden sein, wodurch sich eine größere Bandbreite in der Höhenvariation und damit in der Eingrifftiefe der Klingen ergibt. Anstelle einer Schraubenbefestigung können auch andere Befestigungsarten, wie beispielsweise ein einrastendes Einklinken verwendet werden.

Anstelle der mit Seilzug betätigten Bremseinrichtungen können selbstverständlich auch andere Systeme, wie hydraulische Zylinder verwendet werden.

## Patentansprüche

1. Eine Personen tragend verwendbare Vorrichtung **(30; 63)** zur Fortbewegung auf einer Bodenoberfläche **(2; 31; 85)** mit wenigstens einem Fahrbrett **(3; 33; 65a, 65b)** und einem mit diesem verbundenen, zur Fahrtrichtungssteuerung dienenden Steuerbrett **(1; 34; 66a, 66b),** wobei Fahr- und/oder Steuerbrett **(3; 33; 65a, 65b; 1; 34; 66a, 66b)** wenigstens eine, seitlich zur tragenden Gleitfläche **(11,12; 37a, 37b)** angeordnete, für einen Fahrbodeneingriff ausgebildete Führungsklinge **(7a - 7d; 35a - 35d; 67a - 67h)** aufweist bzw. aufweisen, **dadurch gekennzeichnet, dass** eines der Bretter **(3; 33; 65a, 65b; 1; 34; 66a, 66b),** insbesondere das Fahrbrett **(3; 33;65a, 65b),** eine im Brettendbereich über die Brettbreite verlaufende, nach unten aus der Gleitfläche **(12)** des Brettes **(3; 33; 65a, 65b; 1; 34; 66a, 66b)** herausfahrbare Bremseinrichtung **(4; 39; 74a, 74b)** hat, wobei das Herausfahren mit einer Schwenkbewegung **(20)** entgegen dem Uhrzeigersinn bei einem Blick in Richtung der Schwenkachse **(15; 40; 76)** der Bremseinrichtung **(4;39;74a, 74b)** mit einer Fahrtrichtung **(14, 47)** von rechts nach links erfolgt.

2. Vorrichtung **(30; 63)** nach Anspruch 1, **dadurch gekennzeichnet, dass** jede Führungsktinge **(7a - 7d; 35a - 35d; 67a - 67h)** eine Befestigungsvorrichtung **(27a, 27b, 29)** zum seitlichen Befestigen am Fahr- und/oder Steuerbrett **(3; 33; 65a, 65b; 1; 34; 66a, 66b)** hat bzw. haben sowie eine obere und eine untere Fahrkante **(25a - 25d)** an jeder Klinge **(7a - 7d; 35a - 35d; 67a - 67h)** vorhanden sind, wobei bevorzugt die Befestigungsvorrichtung **(27a, 27b, 29)** aussermittig angeordnet ist, um gegenüber der Gleitfläche **(11, 12, 37a, 37b)** der Bretter **(3; 33; 65a, 65b; 1; 34; 66a, 66b)** wenigstens zwei ünterschiedliche Eindringtiefen der Fahrkanten **(25a - 25d)** zur Auswahl zu haben.

3. Vorrichtung **(30; 63)** nach Anspruch 1 oder 2, **gekennzeichnet durch** eine im Fahrbrettendbereich über die Brettbreite verlaufende, nach unten über die Gleitfläche **(12)** des Fahrbrettes **(3; 33; 65a, 65b)** herausfahrbare Bremseinrichtung **(4; 39; 74a, 74b)** mit bevorzugt über die ganze Brettbreite angeordneten Bodeneingreifelementen **(13),** wobei vorzugsweise der Bremseinrichtung **(4; 39; 74a, 74b)** in Fahrtrichtung **(14; 47)** ein Freiraum **(21; 49)** vorgeordnet ist, und der Freiraumquerschnitt, insbesondere dessen Breite in Fahrtrichtung **(14; 47)** derart groß gewählt ist, dass beim Bremsen abgeraspeltes Bodenmaterial einwandfrei austreten kann ohne ein Verstopfen des Freiraums (21; 49) zu verursachen, und eine mehr oder weniger starke Bremswirkung sich je nach heraus gefahrenem Bodeneingreifweg ergibt.

4. Vorrichtung **(30; 63)** nach einem der Ansprüche 1 bis 3, **dadurch gekennzeichnet, dass** jede Führungsklinge **(7a - 7d; 35a - 35d; 67a - 67h)** lediglich an einem seitlichen Teilbereich des Fahr- und/oder Steuerbretts **(3; 33; 65a, 65b; 1; 34; 66a, 66b)** und vorzugsweise die Führungsklingen **(7a - 7d; 35a - 35d; 67a - 67h)** beidseits des Fahr- und/oder Steuerbretts **(3; 33; 65a, 65b; 1; 34; 66a, 66b)** angeordnet ist bzw. sind sowie jedes Steuerbrett **(1; 34; 66a, 66b)** in bevorzugter Weise zusätztich um eine annähernd horizontal verlaufende Schwenkachse schwenkbar angeordnet ist, um bei einem unebenen Boden ein besseres Fahrverhalten zu erreichen.

5. Vorrichtung **(30)** nach einem der Ansprüche 1 bis 4, **gekennzeichnet durch,** ein Lenkmittel **(44)** für eine manuelle Betätigung, wobei das Lenkmittel **(44)** derart ausgebildet ist, dass es von einer auf oder mittelbar auf dem Fahrbrett **(33)** befindlichen Person bedienbar ist und vorzugsweise am Lenkmittel **(44)** ein Betätigungselement **(45)** wenigstens für eine Bremseinrichtung **(39)** mit insbesondere einem Bodeneingreifelement zur manuellen Bedienung angeordnet ist sowie vorzugsweise das Fahrbrett **(33)** derart breit ausgebildet ist, dass die Person mit beiden Füßen nebeneinander plaziert darauf stehen kann.

6. Vorrichtung **(30)** nach Anspruch 5, **dadurch gekennzeichnet, dass** dem Fahrbrett **(33)** wenigstens eine Fußhaltelasche **(52a, 52b)** zugeordnet ist und insbesondere das Lenkmittel **(44)** gegen das Fahrbrett **(33),** vorzugsweise zusammen mit dem Steuerbrett, **(34)** einklappbar angeordnet ist, um ein angenehmes platzsparendes Tragen der Vorrichtung **(30)** zu ermöglichen.

7. Vorrichtung **(63)** nach einem der Ansprüche 1 bis 4, insbesondere nach Anspruch 3, **gekennzeichnet durch durch** ein linkes und ein rechtes nebeneinander angeordnetes Paar bestehend aus einem Fahr- und einem Steuerbrett **(65a, 65b, 66a, 66b),** wobei das linke und das rechte Steuerbrett **(66a, 66b)** gemeinsam **durch** eine Lenkeinrichtung **(70)** zur Fahrrichtungssteuerung verstellbar sind, um die Vorrichtung **(63)** als steuerbaren Schlitten verwenden zu können, und insbesondere an der Steuereinrichtung **(69)** wenigstens ein Betätigungselement **(84a, 84b)** für ein Bodeneingreifelement vorhanden ist; bevorzugt jedoch zwei Betätigungslemente **(84a, 84b)** vorhanden sind, um eine linke am linken Fahrbrett **(65a)** angeordnete Bremseinrichtung **(74a)** unabhängig von einer rechten am rechten Fahrbrett **(65b)** angeordneten Bremseinrichtung **(74b)** zu Brems- und auch zu Steuerungszwecken verwenden zu können.

8. Vorrichtung **(30, 63)** nach Anspruch 3, **dadurch gekennzeichnet, dass** jede Bremseinrichtung **(4; 39; 74a, 74b)** selbsttätig nach einer Entriegelung auf einen Bodeneingreifweg einstellbar ist, mit dem eine maximale Bremswirkung erzeugbar ist, wobei die Entriegelung über ein mit einer die Vorrichtung **(30, 63)** fahrenden Person verbindbares Entriegelungselement **(87),** welches einrastend eine Entriegelungsvorrichtung gespannt hält, vornehmbar ist.

9. Vorrichtung **(63)** nach Anspruch 5 oder 7, **gekennzeichnet durch** eine Skiliftbügeleinhängevorrichtung **(117);** an der ein Skiliftbügel einhängbar ist, und eine auslösbare Halteeinrichtung **(120, 121)** für die Skiliftbügeleinhängevorrichtung, **durch** deren Auslösung der Skiliftbügel freigegeben wird.

10. Vorrichtung **(30; 63)** nach einem der Ansprüche 1 bis 9, **gekennzeichnet durch** Rollelemente **(55),** welche auf jede Führungsklinge **(7a - 7d; 35a - 35d; 67a -** **67h)**, bevorzugt verriegelbar, aufschiebbar sind, damit die Vorrichtung **(30; 63)** auf den Rollelementen **(55)** verfahrbar verwendbar ist.

11. Vorrichtung **(30; 63)** nach Anspruch 1, **dadurch gekennzeichnet, dass** die Bremseinrichtung **(4; 39; 74a, 74b)** ein Bodeneingreifelement **(13)** hat, welches als zweiteilige Platte mit einer um eine Schwenkachse **(15; 40; 76)** schwenkbaren ersten Platte **(16a)** ausgebildet ist, an deren der Schwenkachse **(15)** abgewandten Plattenende eine zweite Platte **(16b)** etwa senkrecht gegen das Brett **(3; 33; 65a, 65b)** vorstehend angeordnet ist.

## Claims

1. A device (30; 63) which can be used for carrying persons for movement on a surface (2; 31; 85), having at least a carrier board (3; 33; 65a, 65b) and a control board (1; 34; 66a, 66b) which is connected thereto and which serves to control the direction of travel, the carrier and/or control board (3; 33; 65a, 65b; 1; 34; 66a, 66b) having at least one guide blade (7a-7d; 35a-35d; 67a-67h) which is arranged laterally relative to the carrying sliding face (11, 12; 37a, 37b) and which is constructed for engaging with the ground during movement, **characterised in that** one of the boards (3; 33; 65a, 65b; 1; 34; 66a, 66b), in particular the carrier board (3; 33; 65a, 65b), has a brake device (4; 39; 74a, 74b) which extends over the board width in the end region of the board and which can be extended downwards out of the sliding face (12) of the board (3; 33; 65a, 65b; 1; 34; 66a, 66b), the extending operation being effected with a pivot movement (20) in a counter-clockwise direction when viewed in the direction of the pivot axis (15; 40; 76) of the brake device (4; 39; 74a, 74b) with a direction of travel (14, 47) from right to left.

2. Device (30; 63) according to claim 1, **characterised in that** each guide blade (7a-7d; 35a-35d; 67a-67h) has a securing device (27a, 27b, 29) for being laterally secured to the carrier and/or control board (3; 33; 65a, 65b; 1; 34; 66a, 66b) and there are provided an upper and a lower travel edge (25a-25d) on each blade (7a-7d; 35a-35d; 67a-67h), the securing device (27a, 27b, 29) preferably being arranged eccentrically in order to have the option of being able to select from at least two different penetration depths of the travel edges (25a-25d) relative to the sliding face (11, 12, 37a, 37b) of the boards (3; 33; 65a, 65b; 1; 34; 66a, 66b).

3. Device (30; 63) according to claim 1 or 2, **characterised by** a brake device (4; 39; 74a, 74b) which extends over the board width in the end region of the carrier board and which can be extended downwards over the sliding face (12) of the carrier board (3; 33; 65a, 65b), preferably having ground engagement elements (13) which are arranged over the entire board width, with a space (21; 49) preferably being arranged in front of the brake device (4; 39; 74a, 74b) in the direction of travel (14; 47), and the space cross-section, in particular the width in the direction of travel (14; 47) thereof, being selected to be so large that ground material which is broken-away during braking can be completely discharged without a blockage of the space (21; 49) being caused, and a more or less effective braking action is produced in accordance with the extended ground engagement path.

4. Device (30; 63) according to any one of claims 1 to 3, **characterised in that** each guide blade (7a-7d; 35a-35d; 67a-67h) is arranged only at one lateral part-region of the carrier and/or control board (3; 33; 65a, 65b; 1; 34; 66a, 66b) and preferably the guide blades (7a-7d; 35a-35d; 67a-67h) are arranged at both sides of the carrier and/or control board (3; 33; 65a, 65b; 1; 34; 66a, 66b) and each control board (1; 34; 66a, 66b) is further preferably arranged so as to be pivotable about a pivot axis which extends substantially horizontally in order to achieve better travel characteristics in the case of uneven ground.

5. Device (30) according to any one of claims 1 to 4, **characterised by** a steering means (44) for manual operation, the steering means (44) being in such a form that it can be operated by a person who is located on or indirectly on the carrier board (33) and an operation element (45) is preferably arranged on the steering means (44) at least for a brake device (39) having in particular a ground engagement element for manual operation and the carrier board (33) is preferably constructed so as to be so wide that the person can stand thereon with both feet positioned beside each other.

6. Device (30) according to claim 5, **characterised in that** at least one foot-retaining strap (52a, 52b) is associated with the carrier board (33) and in particular the steering means (44) is arranged so as to be able to be folded up relative to the carrier board (33), preferably together with the control board (34), in order to allow the device (30) to be carried in a pleasant, space-saving manner.

7. Device (63) according to any one of claims 1 to 4, in particular according to claim 3, **characterised by** a left-hand and a right-hand pair arranged beside each other, comprising a carrier board and a control board (65a, 65b, 66a, 66b), the left-hand and the right-hand control board (66a, 66b) being movable together by means of a steering device (70) in order to control the travel direction in order to be able to use the device (63) as a steerable sledge, and in particular at least one actuation element (84a, 84b) for a ground engagement element being provided on the control device (69); however, two actuation elements (84a, 84b) are preferably provided in order to be able to use a left-hand brake device (74a), which is arranged on the left-hand carrier board (65a), independently of a right-hand brake device (74b), which is arranged on the right-hand carrier board (65b), for braking and also for control purposes.

8. Device (30, 63) according to claim 3, **characterised in that** each brake device (4; 39; 74a, 74b) can be adjusted automatically, after being unlocked, to a ground engagement path, by means of which a maximum braking action can be produced, the unlocking being able to be effected by means of an unlocking element (87) which can be connected to a person who is driving the device (30, 63) and which holds an unlocking device tensioned in an engaging manner.

9. Device (63) according to claim 5 or 7, **characterised by** an engagement device (117) for a ski-lift tow-bar, by means of which engagement device (117) a ski-lift tow-bar can be engaged, and a releasable retaining device (120, 121) for the ski-lift tow-bar engagement device, with the ski-lift tow-bar being freed by the retaining device (120, 121) being released.

10. Device (30; 63) according to any one of claims 1 to 9, **characterised by** roller elements (55) which can be fitted, preferably locked, to each guide blade (7a-7d; 35a-35d; 67a-67h) so that the device (30; 63) can be used displaceably on the roller elements (55).

11. Device (30; 63) according to claim 1, **characterised in that** the brake device (4; 39; 74a, 74b) has a ground engagement element (13) which is in the form of a two-part plate having a first plate (16a), which can be pivoted about a pivot axis (15; 40; 76) and at the plate end of which that is remote from the pivot axis (15) a second plate (16b) is arranged so as to protrude substantially perpendicularly relative to the board (3; 33; 65a, 65b).

## Revendications

1. Dispositif (30 ; 63) utilisable pour porter des personnes et destiné à se déplacer sur une surface de sol (2 ; 31 ; 85), comportant au moins une planche de transport (3 ; 33 ; 65a, 65b) et une planche de commande (1 ; 34 ; 66a, 66b), reliée à cette dernière et destinée à commander la direction de conduite, la planche de transport (3 ; 33 ; 65a, 65b) et/ou la planche de commande (1 ; 34 ; 66a, 66b) comportant au moins une lame de guidage (7a-7d ; 35a-35d ; 67a-67h), agencée latéralement à une face de glissement portante (11, 12 ; 37a, 37b) et conçue pour entrer en prise avec le sol, **caractérisé en ce que** l'une des planches (3 ; 33 ; 65a, 65b ; 1 ; 34 ; 66a, 66b), plus particulièrement la planche de transport (3 ; 33 ; 65a, 65b) possède un dispositif de freinage (4 ; 39 ; 74a, 74b), extractible vers le bas hors de la face de glissement (12) de la planche (3 ; 33 ; 65a, 65b ; 1 ; 34 ; 66a, 66b) et s'étendant dans la zone d'extrémité de la planche sur la largeur de la planche, l'extraction étant effectuée par un mouvement de pivotement (20) dans le sens anti-horaire par référence à la direction de l'axe de pivotement (15 ; 40 ; 76) du dispositif de freinage (4 ; 39 ; 74a, 74b) pour une direction de conduite (14, 47) de la droite vers la gauche.

2. Dispositif (30 ; 63) selon la revendication 1, **caractérisé en ce que** chaque lame de guidage (7a-7d ; 35a-35d ; 67a-67h) comporte un dispositif de fixation (27a, 27b, 29) pour la fixation latérale contre la planche de transport et/ou la planche de commande (3 ; 33 ; 65a, 65b ; 1 ; 34 ; 66a, 66b), ainsi qu'un bord de guidage supérieur et inférieur (25a-25d) contre chaque lame (7a-7d ; 35a-35d ; 67a-67h), le dispositif de fixation (27a, 27b, 29) étant de préférence excentré pour avoir au choix au moins deux profondeurs de pénétration différentes des bords de guidage (25a-25d) par rapport à la surface de glissement (11, 12, 37a, 37b) des planches (3 ; 33 ; 65a, 65b ; 1 ; 34 ; 66a, 66b).

3. Dispositif (30 ; 63) selon la revendication 1 ou 2, **caractérisé par** un dispositif de freinage (4 ; 39 ; 74a, 74b), qui est extractible vers le bas hors de la face de glissement (12) de la planche de transport (3 ; 33 ; 65a, 65b) et s'étend dans la zone d'extrémité de la planche sur la largeur de la planche et qui comporte des éléments de prise avec le sol (13), agencés de préférence sur toute la largeur de la planche, un espace libre (21 ; 49) étant agencé de préférence en amont du dispositif de freinage (4 ; 39 ; 74a, 74b) dans la direction de conduite (14 ; 47) et la section de l'espace libre, en particulier la largeur de celui-ci dans la direction de déplacement (14 ; 47) étant dimensionnée de telle sorte que le matériau du sol arraché par frottement pendant le freinage peut s'évacuer parfaitement sans provoquer un engorgement de l'espace libre (21 ; 49) et il se produit un effet de freinage plus ou moins fort en fonction de la distance de prise au sol extraite.

4. Dispositif (30 ; 63) selon l'une quelconque des revendications 1 à 3, **caractérisé en ce que** chaque lame de guidage (7a-7d ; 35a-35d ; 67a-67h) est agencée uniquement dans une zone partielle latérale de la planche de transport et/ou de la planche de commande (3 ; 33 ; 65a, 65b ; 1 ; 34 ; 66a, 66b) et, de préférence, les lames de guidage (7a-7d ; 35a-35d ; 67a-67h) sont agencées de part et d'autre de la planche de commande (3 ; 33 ; 65a, 65b ; 1 ; 34 ; 66a, 66b), ainsi que, de manière préférée, chaque planche de commande (1 ; 34 ; 66a, 66b) est, en plus, montée pivotante autour d'un axe de pivotement orienté presque horizontalement, pour fournir un meilleur comportement de conduite sur un sol inégal.

5. Dispositif (30) selon l'une quelconque des revendications 1 à 4, **caractérisé par** un moyen de guidage (44) pour une manoeuvre manuelle, le moyen de guidage (44) étant conçu de telle sorte qu'il peut être manoeuvré par une personne située sur ou indirectement sur la planche de transport (33) et un élément de manoeuvre (45) pour au moins un dispositif de freinage (39) est agencé de préférence contre le moyen de guidage (44) avec en particulier un élément de prise au sol pour la manoeuvre manuelle, et la planche de transport (33) est conçue avec une largeur telle que la personne peut être débout sur celle-ci avec les deux pieds juxtaposés.

6. Dispositif (30) selon la revendication 5, **caractérisé en ce qu'**au moins une patte de retenue du pied (52a, 52b) est associée à la planche de transport (33) et en particulier le moyen de guidage (44) est agencé de manière rabattable contre la planche de transport (33), de préférence conjointement à la planche de commande (34), pour pouvoir porter confortablement et avec peu d'encombrement le dispositif (30).

7. Dispositif (63) selon l'une quelconque des revendications 1 à 4, en particulier selon la revendication 3, **caractérisé par** une planche de transport et une planche de commande (65a, 65b, 66a, 66b) formées par une paire gauche et une paire droite juxtaposées, les planches de commande (66a, 66b) gauche et droite pouvant être réglées conjointement par un dispositif de guidage (70) destiné à commander la direction de conduite en vue de pouvoir utiliser le dispositif (63) sous forme de luge apte à être commandée, et en particulier un élément de manoeuvre (84a, 84b) pour un élément de prise au sol étant agencé contre le dispositif de commande (69), toutefois il est prévu de préférence deux éléments de manoeuvre (84a, 84b) pour pouvoir utiliser à des fins de freinage et de commande un dispositif de freinage gauche (74a), agencé contre la planche de transport gauche (65a), indépendamment d'un dispositif de freinage droit (74b), agencé contre la planche de transport droite (65b).

8. Dispositif (30 ; 63) selon la revendication 3, **caractérisé en ce que** chaque dispositif de freinage (4 ; 39 ; 74a, 74b) est réglable automatiquement par déverrouillage sur une distance de prise au sol permettant de générer un effet de freinage maximum, le déverrouillage pouvant être effectué par un élément de déverrouillage (87) pouvant être relié à une personne utilisant le dispositif (30, 63), lequel élément par enclenchement maintient un dispositif de verrouillage en position tendue.

9. Dispositif (63) selon la revendication 5 ou 7, **caractérisé par** un dispositif d'accrochage (117) contre lequel peut être accroché un étrier de téléski, et un dispositif de retenue (120, 121) destiné au dispositif d'accrochage à l'étrier de téléski et pouvant être ouvert en vue de libérer l'étrier de téléski.

10. Dispositif (30 ; 63) selon l'une quelconque des revendications 1 à 9, **caractérisé par** des éléments à roulettes (55), lesquels peuvent être fixés, de préférence bloqués, sur chaque lame de guidage (7a-7d ; 35a-35d ; 67a-67h) en vue de pouvoir utiliser le dispositif (30 ; 63) roulant sur les éléments à roulettes (55).

11. Dispositif (30 ; 63) selon la revendication 1, **caractérisé en ce que** le dispositif de freinage (4 ; 39 ; 74a, 74b) comporte un élément de prise au sol (13) qui est conçu sous forme de plaque en deux parties avec une première plaque (16a) montée pivotante autour d'un axe de pivotement (15 ; 40 ; 76) et contre l'extrémité de laquelle, opposée à l'axe de pivotement (15), est agencée une deuxième plaque (16b) en saillie vers l'avant contre la planche (3 ; 33 ; 65a, 65b) pratiquement perpendiculairement.
